# EUROPÄISCHE PATENTSCHRIFT

(11) **EP 3 521 780 B1**
(45) Veröffentlichungstag und Bekanntmachung des Hinweises auf die Patenterteilung: **01.11.2023**
(21) Anmeldenummer: 19157882.2
(22) Anmeldetag: 10.02.2012
(51) Int. Cl.: G01G 17/08, G01G 21/22

(54) **PLATTFORMWAAGE**
WEIGHING APPARATUS WITH A PLATFORM
PLATE-FORME DE PESAGE

(30) Priorität: 11.02.2011 DE 102011000682
(43) Veröffentlichungstag der Anmeldung: 07.08.2019
(62) Teilanmeldung aus: 12155008.1
(73) Patentinhaber: Janner, Siegfried, 92708 Mantel (DE)
(72) Erfinder: Janner, Siegfried, 92708 Mantel (DE)
(74) Vertreter: Lang, Christian

(56) Entgegenhaltungen:
- EP-A1- 0 440 567
- EP-A1- 1 031 669
- EP-B1- 1 031 669
- DE-U1- 9 105 992
- GB-A- 1 602 921
- US-A- 4 739 848

## Beschreibung

### HINTERGRUND DER ERFINDUNG

### GEBIET DER ERFINDUNG

Die vorliegende Erfindung betrifft eine Plattformwaage nach dem Oberbegriff des Anspruchs 1 bzw. ein Verfahren zu deren Herstellung nach dem Oberbegriff des Anspruchs 7.

### STAND DER TECHNIK

Plattformwaagen zum Wiegen unterschiedlichster Güter sind aus dem Stand der Technik bereits bekannt, wie z.B. in DE 91 05 992 U1 beschrieben. Diese Waagen sind üblicherweise so aufgebaut, dass eine möglichst steife Plattform auf einer entsprechenden Lagereinrichtung gelagert ist, die üblicherweise Wägezellen, insbesondere in Form von elektronischen Wägezellen umfasst, sodass bei einer Auflage von zu wiegenden Gütern auf der Plattform die Gewichtskraft der zu wiegenden Güter über die Plattform auf die Lagereinrichtung mit den Wägezellen übertragen wird, sodass die Wägezellen das Gewicht der zu wiegenden Gütern bestimmen können.

Hierbei ist es wichtig, dass die Plattform steif ausgebildet ist und durch Vermeidung von Verformungen z. B. in Form von Verbiegungen oder Verwindungen, eine Beeinflussung des Messergebnisses verhindert wird. Entsprechend ist es bekannt, derartige Plattformen massiv auszubilden, wobei sowohl massive Auflageplatten zur Aufnahme der zu wiegenden Güter als auch massive Versteifungsstreben eingesetzt werden. Durch die Verwendung von massiven Auflageplatten mit einer hohen Materialdicke oder von massiven Versteifungsstreben, beispielsweise in Form von Doppel-T-förmigen Stahlträgern kann zwar die gewünschte Festigkeit und Stabilität erzielt werden, jedoch ist ein hoher Materialeinsatz erforderlich und das Gewicht der Plattformwaage wird sehr hoch.

### OFFENBARUNG DER ERFINDUNG

### AUFGABE DER ERFINDUNG

Es ist deshalb Aufgabe der Erfindung eine Plattformwaage zu schaffen, bei der sowohl die erforderliche Formfestigkeit und Stabilität der Plattform gewährleistet ist, jedoch gleichzeitig der Materialeinsatz und das Gewicht reduziert werden. Darüber hinaus soll eine entsprechende Plattformwaage einfach herstellbar sein.

### TECHNISCHE LÖSUNG

Diese Aufgabe wird gelöst durch eine Plattformwaage mit den Merkmalen des Anspruchs 1 sowie ein Verfahren zur Herstellung einer Plattformwaage mit den Merkmalen des Anspruchs 7. Vorteilhafte Ausgestaltungen sind Gegenstand der abhängigen Ansprüche.

Gemäß der vorliegenden Erfindung wird eine Gewichtsreduzierung und eine Verringerung des Materialeinsatzes bei gleichbleibender Steifigkeit der Plattform einer Plattformwaage dadurch erreicht, dass eine Rahmenkonstruktion zur Versteifung vorgesehen ist, welche Versteifungsstreben aufweist, die durch ein Kantprofil gebildet sind, welches durch mehrere Kantungen eines Blechs hergestellt ist. Statt eines doppel-T-förmigen Stahlträgers wird somit ein Kantprofil aus einem Metallblech, insbesondere Stahl- oder Aluminiumblech eingesetzt, welches seine Steifigkeit durch die entsprechende Querschnittform erhält. Dadurch kann Material eingespart und das Gewicht der Plattform einer Plattformwaage reduziert werden, wobei gleichzeitig die Steifigkeit der Plattform erhalten bleibt.

Zusätzlich oder alternativ kann bei einem Kantprofil mit mindestens einer Kantung mindestens eine Randkante vorgesehen sein, die zur Kantung parallele und nicht-parallele Abschnitte und/oder Abschnitte mit zur Kantung parallelen und nicht-parallelen Anteilen, also z.B. schräg oder gekrümmt zur Kantung verlaufende Abschnitte, aufweist. Durch das Vorsehen eines Kantprofils ist es nämlich möglich, sehr individuelle Versteifungsstreben in einfacher Weise herzustellen, bei denen geeignete Aussparungen, Ausnehmungen, Bohrungen, Einschnitte, schräg verlaufende Randbereiche, gekrümmte Randbereiche und dergleichen vorgesehen sind. Diese können in einfacher Weise, beispielsweise durch Laserschneiden, in ein Blech eingebracht werden, welches anschließend zur Versteifungsstrebe gekantet wird. Dadurch lassen sich sehr komplexe Geometrien von Versteifungsstreben in einfacher Weise herstellen. Entsprechend kann für das Verfahren zur Herstellung einer Versteifungsstrebe zur Aussteifung von Plattformen einer Plattformwaage ein Ausgangsblech verwendet werden, welches sich von einem quadratischen oder rechteckigen Blech bzw. quaderförmigen Blech unterscheidet. Vielmehr wird nach dem erfindungsgemäßen Verfahren zur Herstellung einer Plattformwaage die Versteifungsstrebe dafür so hergestellt, dass ein Blech in beliebiger Plattenform, also beliebiger Form der Hauptfläche, die durch die beiden größten Dimensionen der Platte aufgespannt wird, nach Bedarf geschnitten und anschließend zu einer Versteifungsstrebe gekantet wird.

Insbesondere kann die Rahmenkonstruktion zur Versteifung der Plattform mehrere Versteifungsstreben aufweisen, die entweder im Bereich des Randes der Plattform als Längs- und/oder Querstreben angeordnet sind und/oder als Versteifungsstreben quer über die Aufnahmefläche der Plattform verlaufen. Insbesondere können die Versteifungsstreben ein oder mehrere Kreuze ausbilden und/oder parallel und beabstandet zueinander angeordnet sein.

Darüber hinaus kann auch eine Auflageplatte, die die Auflagefläche für die zu wiegenden Güter bildet, in den Randbereichen als Versteifungsstrebe ausgebildet sein, sodass die Versteifungsstreben in die Auflageplatte integriert sind.

Darüber hinaus können die Versteifungsstreben so ausgebildet sein, dass sie einen oder mehrere Bereiche zum Anordnen einer Auflageplatte aufweisen, wie beispielsweise eine ausgebildete Schulter in der Versteifungsstrebe.

Ferner können die Versteifungsstreben Ausnehmungen zum gegenseitigen Ineinandergreifen und/oder zur Aufnahme von weiteren Komponenten aufweisen, wie beispielsweise Ausnehmungen zur Aufnahme von Lagereinrichtungen oder von Aufbauten auf der Plattform.

Die Versteifungsstreben können im Querschnitt unterschiedliche Profilformen aufweisen, wobei insbesondere Profilformen bevorzugt sind, die mindestens vier Kantungen, vorzugsweise fünf oder mehr Kantungen aufweisen, da dadurch die Biege- und Verwindungssteifigkeit der Versteifungsstreben besonders erhöht werden kann.

So können die Versteifungsstreben im Querschnitt eine Form aufweisen, die die Form eines Omegas hat, die den Umfang eines L beschreibt oder die Form eines C oder eines an einer Seite nicht vollständig geschlossenen Rechtecks aufweist.

Die Plattformwaage kann modulartig aus den verschiedenen Komponenten aufgebaut werden, wie Versteifungsstreben, Auflageplatte, Lagereinrichtung etc. Dadurch ist die Herstellung von verschiedensten Plattform, insbesondere von Plattformwaagen mit unterschiedlichen Dimensionen in einfacher Weise möglich, wobei teilweise identische Komponenten im Sinne eines Baukastenprinzips eingesetzt werden können. Die unterschiedlichen Komponenten, wie Versteifungsstreben und Auflageplatte können mittels stoffschlüssiger Verbindung, insbesondere Schweißen und vorzugsweise Punktschweißen miteinander verbunden werden, wobei Ausnehmungen, Öffnungen und dergleichen oder andere Schnitte in der Plattform, insbesondere in den Versteifungsstreben und der Auflageplatte mittels Laserschneiden eingebracht werden können.

Nicht Teil der Erfindung, wird ein Baukastensystem zur Herstellung einer Plattformwaage vorgeschlagen, bei dem neben anderen Komponenten wie Wägezellen, Auflageplatten und dergleichen, mindestens mehrere unterschiedliche Versteifungsstreben enthalten sind, die gemäß den Versteifungsstreben der Plattformwaage bzw. des Herstellungsverfahrens zur Herstellung einer Plattformwaage nach der vorliegenden Beschreibung ausgebildet sind. Die unterschiedlichen Versteifungsstreben sind so ausgebildet, dass sie zur Bildung einer Plattform für eine Plattformwaage kombiniert werden können, so dass die Plattformwaagen in einfacher Weise durch Kombination entsprechender Systemkomponenten hergestellt werden können.

Die Versteifungsstreben können sich in der Form und/oder der Dimension unterscheiden, so dass insbesondere unterschiedlich große Plattformwaagen aus ansonsten gleichartigen Versteifungsstreben hergestellt werden können.

Die Plattformwaagen können Dimensionen mit Plattformen in der Größenordnung von 0,5 m² und mehr, insbesondere 1 m² und mehr, vorzugsweise 5 m² und mehr Plattformfläche aufweisen.

### KURZE BESCHREIBUNG DER ZEICHNUNGEN

Die beigefügten Zeichnungen zeigen in rein schematischer Weise in
- Fig. 1: eine perspektivische Ansicht einer Plattformwaage von unten;
- Fig. 2: eine Draufsicht auf eine Versteifungsstrebe;
- Fig. 3: einen Querschnitt durch die Versteifungsstrebe aus Fig. 2;
- Fig. 4: eine Seitenansicht der Versteifungsstrebe aus Fig. 2;
- Fig. 5: ein weiteres Ausführungsbeispiel einer Versteifungsstrebe in der Draufsicht ähnlich der Fig. 2;
- Fig. 6: eine perspektivische Darstellung einer weiteren Ausführungsform einer Versteifungsstrebe;
- Fig. 7: eine perspektivische Darstellung einer Plattform einer erfindungsgemäßen Plattformwaage mit Versteifungsstreben gemäß Fig. 6;
- Fig. 8: eine perspektivische Ansicht einer weiteren Ausführungsform einer Plattformwaage mit einer Plattform, wie in Fig. 7 dargestellt; und in
- Fig. 9: ein Ausgangsblech für die Herstellung einer Versteifungsstrebe.

### AUSFÜHRUNGSBEISPIELE

Weitere Vorteile, Kennzeichen und Merkmale der vorliegenden Erfindung werden bei der nachfolgend detaillierten Darstellung der Ausführungsbeispiele anhand der beigefügten Zeichnungen deutlich.

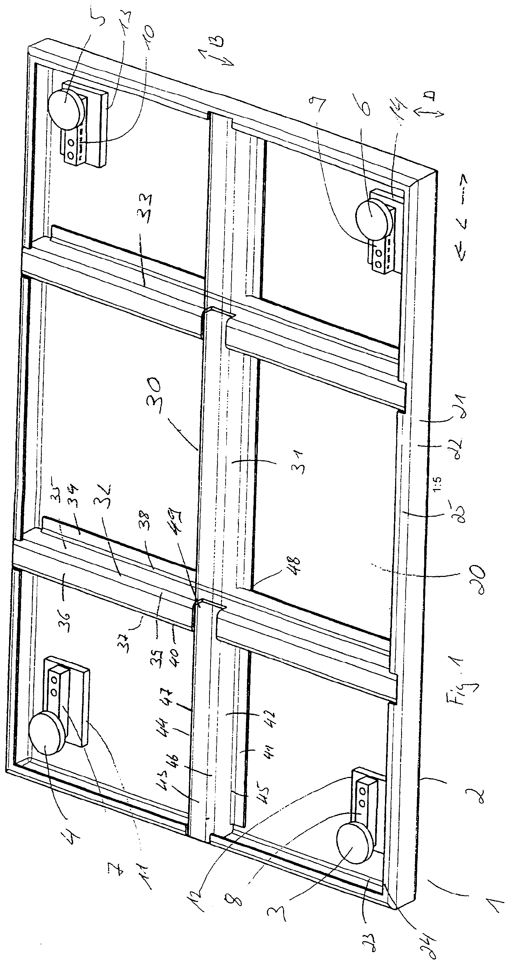

Die Fig. 1 zeigt in einer perspektivischen Darstellung von der Unterseite eine Plattformwaage 1 mit einer Platteform 2, die über vier Lagerblöcke 11, 12, 13, 14, die in den Eckbereichen der rechteckigen Plattform 2 angeordnet sind, und über entsprechende Wägezellen 7, 8, 9, 10 auf Füßen 3, 4, 5, 6 gelagert ist.

Die Plattform 2 umfasst eine Auflageplatte 20, auf der in der Fig. 1 nicht zu sehenden Oberseite, die zu wiegenden Güter gelagert werden können, sodass durch die auf die Plattform 2 bzw. die Auflageplatte 20 einwirkende Gewichtskraft über die Lagereinrichtung mit Lagerblöcken 11, 12, 13, 14, Wägezellen 7, 8, 9, 10 und die Füße 3, 4, 5, 6, abgeleitet wird, sodass die Wägezellen 7, 8, 9, 10 entsprechende Messwerte ermitteln können, die über eine nicht näher dargestellte Auswerteeinheit in eine entsprechende Gewichtsangabe für das gewogene Gut umgerechnet werden können. Über eine Anzeigeeinheit, die ebenfalls nicht dargestellt ist, kann das ermittelte Gewicht ausgegeben werden.

Da die elektronischen Wägezellen 7, 8, 9, 10 die Messwerte auf Grund elastischer Verformungen entsprechender Teile der Wägezellen 7, 8, 9, 10 ermitteln und die verschiedenen Messwerte der Wägezellen 7, 8, 9, 10 miteinander kombiniert werden müssen, ist es erforderlich, dass die Plattform 2 an sich möglichst steif ausgebildet ist, da zu große Verformungen der Plattform 2 das Messergebnis der Plattformwaage 1 verfälschen können. Entsprechend weist die Plattform 2 erfindungsgemäß eine steife Konstruktion auf, die diesen Anforderungen Rechnung trägt.

Die Plattform 2 umfasst eine Auflageplatte 20 und eine Rahmenkonstruktion 30, die über eine stoffschlüssige Verbindung, beispielsweise durch Schweißen, insbesondere Punktschweißen miteinander verbunden sind.

Die Auflageplatte 20 weist eine Länge L auf, deren Richtung durch den Großbuchstaben L mit dem Doppelpfeil gekennzeichnet ist. Darüber hinaus lässt sich eine Breite B definieren, die bei der gezeigten Ausführungsform der Fig. 1 auf Grund der quaderförmigen bzw. rechteckförmigen Grundgestalt der Plattform 2 senkrecht zur Längserstreckung L orientiert ist. Wiederum senkrecht zur Längserstreckung L und zur Breite B ist die Dicke D der quaderförmigen Plattform 2 definiert. Durch die Länge L und die Breite B ist die Auflagefläche an der Oberseite der Aufnahmeplatte 20 definiert, welche gleichzeitig die Aufnahmeebene darstellt. Bei Plattformwaagen mit andersartiger Grundform, also Grundformen, die von der rechteckigen Form abweichen, kann die Auflagefläche bzw. die Auflageebene in ähnlicher Weise durch die maximale Längserstreckung und die maximale Breitenerstreckung definiert werden, welche eine sogenannte Hauptfläche der Plattform 2 bestimmen, die durch die maximalen Dimensionen in unabhängigen Raumrichtungen definiert wird und entsprechend die Auflagefläche darstellt.

Die Auflageplatte 20 weist einen umlaufenden Rand 21 auf, der eine senkrecht zur Auflagefläche bzw. Hauptfläche der Plattform 2 verlaufenden Wandbereich 22 mit einem am anderen Ende wiederum parallel zur Auflagefläche verlaufenden Wandbereich 24 umfasst. Die Wandbereiche 22 und 24 sind durch Biegen der Auflageplatte 20 um jeweils 90 °, also der Wandbereich 21 durch Biegen um einmal 90 ° und der Wandbereich 24 durch Biegen um zweimal 90 ° aus der ebenen Auflageplatte 20 gebildet worden, wobei an den Eckbereichen entsprechende Ausschnitte vorgesehen worden sind, um Überlappungen zu vermeiden. Die Auflagefläche und der senkrecht dazu angeordnete Wandbereich 22 sind durch einen Kantbereich 23 und der Wandbereich 22 mit dem Wandbereich 24 durch einen Kantbereich 25 miteinander verbunden. Durch den abgekanteten Rand 21, welcher im Querschnitt die Form eines C aufweist, wird eine stabile Randkonstruktion geschaffen, die der Auflageplatte 20 eine große Stabilität verleiht.

Um die Stabilität und Festigkeit der Auflageplatte 20 weiterhin zu erhöhen ist an der Unterseite gegenüberliegend der Auflagefläche der Auflageplatte 20 eine Rahmenkonstruktion 30 mit drei Versteifungsstreben 31, 32 und 33 vorgesehen, die als Doppelkreuz ausgebildet ist.

Die Versteifungsstreben 31, 32, 33 bilden im Querschnitt die Form eines Omega (Ω), wobei die äußeren Schenkel des Omega, von denen bei der Versteifungsstrebe 32 lediglich der Schenkel 34 zu sehen ist und bei der Versteifungsstrebe 31 der Schenkel 44, an der Unterseite der Auflageplatte 20 anliegen und mit der Auflageplatte 20 über eine stoffschlüssige Verbindung, beispielsweise in Form einer Verschweißung, z. B. über Punktschweißungen, verbunden sind.

Neben den äußeren Schenkeln der omegaförmigen Querschnittsform der Versteifungsstreben 31, 32 und 33, die an der Auflageplatte 20 angeordnet sind, weisen die Versteifungsstreben 32, 31 und 33 senkrecht zur Auflagefläche angeordnete Wandbereiche 35, 37 bzw. 42, 44 auf, sowie parallel zur Auflagefläche verlaufende Wandbereiche 36 bzw. 43. Die jeweils senkrecht zueinander angeordneten Schenkel bzw. Wandbereiche 34, 35, 36, 37 bzw. 41, 42, 43, 44 sind über Kantbereiche 38, 39, 40 bzw. 45, 46 und 47 miteinander verbunden, mittels denen die 90°-Krümmung erzielt wird. Die Kantbereiche 38, 39, 40 bzw. 45, 46, 47 werden durch 90°-Abkantungen aus einem ebenen Blech erzeugt. Durch die omega-förmige Querschnittsstruktur der Versteifungsstreben 31, 32, 33 kann bei geringem Materialeinsatz eine hohe Steifigkeit, insbesondere Biegesteifigkeit und Verwindungssteifigkeit erzielt werden.

Im Kreuzungsbereich der Verbindungsstreben 31, 32, 33 sind entsprechende Aussparungen 48 und 49 in den Verbindungsstreben 31, 32 vorgesehen, sodass eine kreuzförmige Anordnung der Versteifungsstreben 31, 32 und 33 möglich ist.

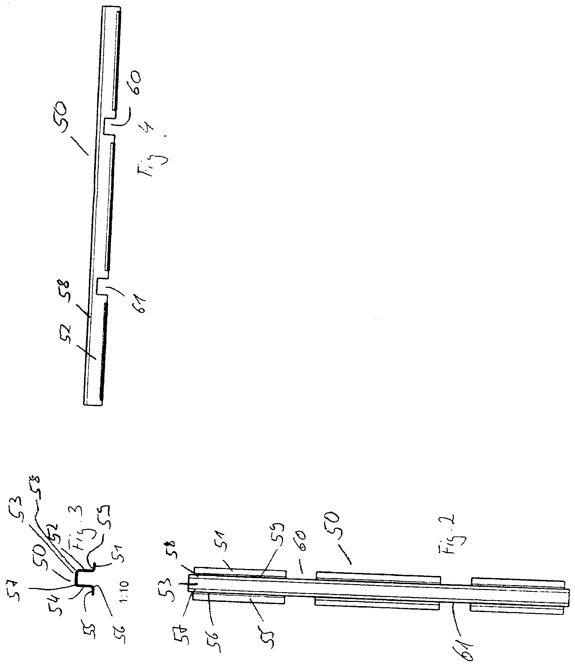

Die Figuren 2 bis 4 zeigen eine Versteifungsstrebe 50 ähnlich der Versteifungsstrebe 31 aus Fig. 1. Wie sich aus Fig. 3 ergibt weist die Versteifungsstrebe 50 ebenfalls einen Omegaform auf, wobei die äußeren Flanken 51 und 55 zur Anordnung auf der Unterseite einer Auflageplatte vorgesehen sind, während die Wandbereiche 52 und 54 im Wesentlichen senkrecht von den äußeren Flanken 51 und 55 hervorstehen und über die Kantbereiche 59 und 56 mit den äußeren Flanken 51 und 55 verbunden sind. Die beiden Wandbereiche 52 und 54 sind wiederum über einen parallel zu den äußeren Flanken 51 und 55 angeordneten Wandbereich 53 verbunden, wobei zwischen dem Wandbereich 52 und dem Wandbereich 53 ein Kantbereich 58 vorgesehen ist, während zwischen dem Wandbereich 53 und dem Wandbereich 54 der Kantbereich 57 angeordnet ist.

In der Seitendarstellung der Fig. 4 sind die Ausnehmungen 61 und 60 zu erkennen, die sich im Wesentlichen in den Wandbereichen 52 und 54 sowie den äußeren Flanken 51 und 55 befinden und dazu dienen quer angeordnete Versteifungsstreben aufzunehmen, wie im Ausführungsbeispiel der Fig. 1 gezeigt.

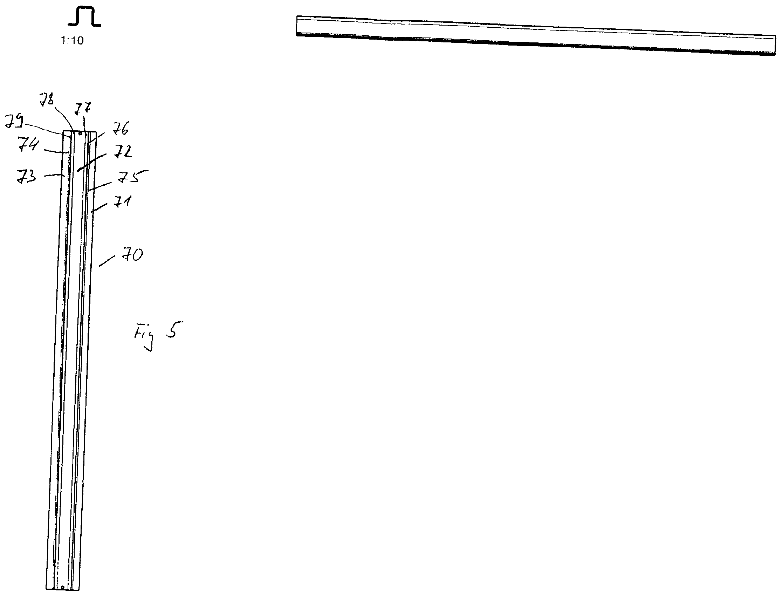

Die Fig. 5 zeigt eine weitere Versteifungsstrebe 70 ähnlich der Ausführungsform der Figuren 2 bis 4 jedoch ohne entsprechende Ausnehmungen. Die Querschnittsform ist wiederum omega-förmig, mit äußeren Flanken 71 und 73, senkrecht dazu angeordneten Wandbereichen 75 und 74 sowie einem dazwischen angeordneten verbindenden Wandbereich 72. Dazwischen sind wiederum entsprechende Kantbereiche 76, 77, 78 und 79, die durch eine entsprechende Abkantung eines ebenen Blechs in die gezeigte Profilform der Versteifungsstrebe 70 entstehen.

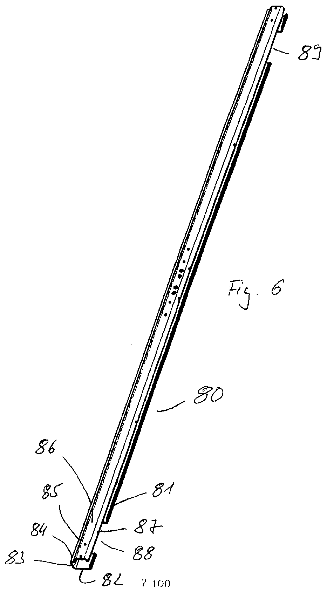

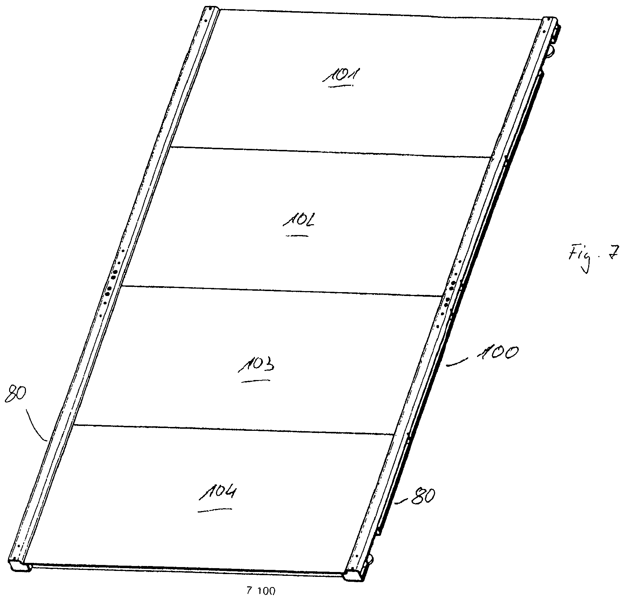

Die Fig. 6 zeigt eine weitere Ausführungsform einer Versteifungsstrebe, die im Querschnitt die Form des äußeren Umfangs eines L aufweist, wobei die Versteifungsstrebe 80 insgesamt 7 Wandbereiche 81 bis 87 aufweist. Beginnend mit dem Wandbereich 81 schließen sich jeweils um 90° in Uhrzeigerrichtung abgebogene Wandbereiche 82, 82 und 84 an. Während der Wandbereich 85 gegenüber dem Wandbereich 84 entgegen dem Uhrzeigersinn um 90° gedreht ist und die Wandbereich 86 und 87 wiederum um 90° jeweils gedreht gegenüber dem vorausgehenden Wandbereich im Uhrzeigersinn angeordnet sind. Durch die Wandbereiche 85 und 85 ist eine Schulter ausgebildet, in welcher eine Auflageplatte angeordnet werden kann, wie nachfolgend in Fig. 7 dargestellt.

In Fig. 6 ist bei der dort dargestellten Versteifungsstrebe 80 weiterhin zur erkennen, dass Ausnehmungen 88 und 89 vorgesehen sind, die in dem vorliegenden Fall der Versteifungsstrebe zur Aufnahme der Lagereinrichtungen der Plattform mit Füßen und Wägezellen dienen.

Die Fig. 7 zeigt die Versteifungsstrebe 80 im eingebauten Zustand in einer Plattform 100, wobei sich zwei Versteifungsstreben 80 parallel zueinander an den Längsseiten der Plattform 100 erstrecken, wobei zwischen den Versteifungsstreben 80 mehrere Auflageplatten 101 bis 104 nebeneinander angeordnet sind, wobei die Auflageplatten in den Schultern, die durch die Wandbereich 84 und 85 der Versteifungsstreben 80 gebildet sind (s. Fig. 6), gelagert sind.

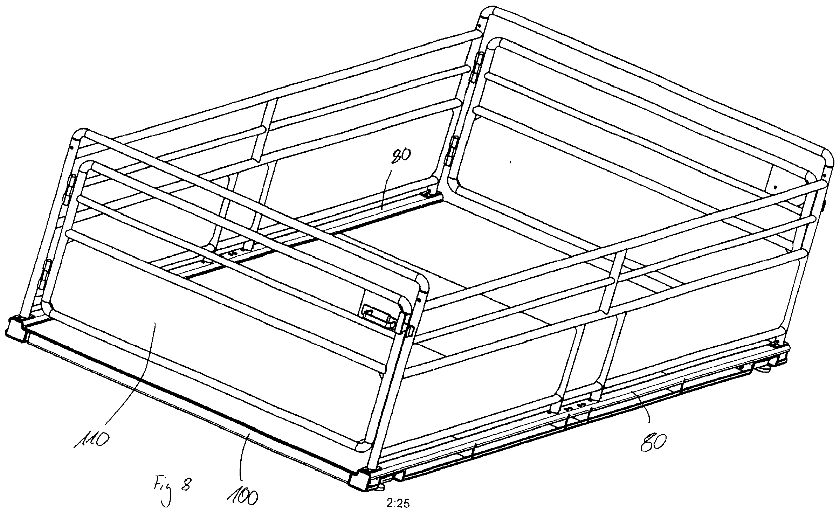

Die Fig. 8 zeigt die Plattform 100 in einer Plattformwaage, die als Viehwaage ausgebildet ist. Entsprechend sind auf der Plattform 100 insbesondere in entsprechenden Öffnungen in den randseitigen Versteifungsstreben 80 Aufbauten in Form von Gattern 110 zur Aufnahme der zu wiegenden Tiere vorgesehen.

Die Ausführungsform der Fig. 8 zeigt, dass die erfindungsgemäße Plattformwaage in großen Dimensionen herstellbar ist, wobei durch die Verwendung der Kantprofile als Versteifungsstreben eine hohe Steifigkeit, insbesondere Biegefestigkeit und Verwindungssteifigkeit erzielt werden kann, die ein präzises Messergebnis ermöglicht.

Durch den modulartigen Aufbau der erfindungsgemäßen Plattformwaage mit Versteifungsstreben in Form von Kantprofilen zur Bildung einer Rahmenkonstruktion sowie mit einer entsprechenden Auflageplatte, die mit der Rahmenkonstruktion verbunden wird, um eine Plattform zu bilden, die wiederum auf einer Lagereinrichtung mit entsprechenden Füßen, Wägezellen und dergleichen angeordnet ist, ist mit wenigen verschiedenen Bauteilen die Realisierung verschiedenster Plattformwaagen, insbesondere in verschiedensten Dimensionen und für verschiedenste Einsatzbereiche, also Wiegebereiche, möglich, da teilweise identische Komponenten verwendet werden können. Beispielsweise kann die Plattform 100 aus dem Ausführungsbeispiel der Figuren 7 und 8 durch Verwendung verlängerter Längsversteifungsstreben 80 in einfacher Weise in der Länge verlängert werden, da lediglich eine oder mehrere zusätzliche Auflageplatten angeordnet werden müssen. Zudem können quer angeordnete Versteifungsstreben, wie sie beispielsweise in den vorangegangenen Figuren 2 bis 5 dargestellt worden sind, zur Versteifung der Plattform 100 eingesetzt werden, sodass zur Anpassung der unterschiedlichen Dimension lediglich die Längsversteifungsstreben 80 in unterschiedlichen Längen ausgebildet werden müssen.

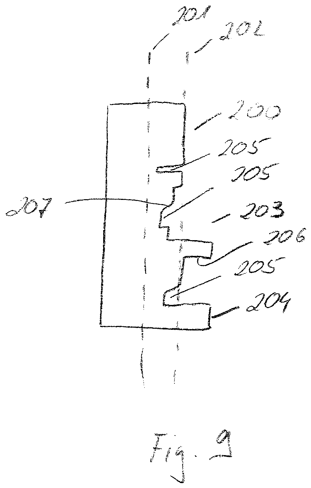

Die Fig. 9 zeigt eine Draufsicht auf ein Blech 200, wie es als Ausgangsblech für eine Versteifungsstrebe verwendet werden kann. Die gestrichelten Linien 201 und 202 zeigen die Kantlinien, entlang denen das Blech 200 gekantet wird, um beispielsweise im dargestellten Fall eine S- oder U-Form im Querschnitt des fertigen Kantprofils zu bilden.

Entlang der Seite 203 des Blechs 200, die im Wesentlichen parallel zu den Kantlinien 201 und 202 verläuft, weist die Randkante 204 eine Vielzahl von Ausnehmungen und Einschnitten 205 auf, wobei die Randkante 204 in diesen Bereichen quer zur Richtung der Kantlinien 201 und 202 verläuft. Beispielsweise verläuft die Randkante 204 im Bereich 206 senkrecht zur Kantlinie 202. Allerdings sind auch schräge Verläufe der Randkante 204 mit entsprechend parallelen Anteilen zu den Kantlinien 201 und 202 sowie nicht-parallelen Anteilen zu den Kantlinien 201 und 202 möglich, wie beispielsweise im Bereich 207 gezeigt. Dadurch lässt sich eine Versteifungsstrebe erzeugen, die ein individuelles, angepasstes Design der Versteifungsstrebe ermöglicht. Die Randkante 204 mit den Ausnehmungen und Einschnitten 205 kann in einfacher Weise durch Laserschneiden erzeugt werden.

Ähnlich wie die Versteifungsstreben können auch weitere Komponenten der Plattform, wie z.B. die Auflageplatten und/oder Lagereinrichtungen durch Laserschneiden und/oder Kanten hergestellt werden, beispielsweise eine Auflageplatte mit einer gekanteten Stirnseite, die eine in beliebiger Form geschnittene Randkante aufweist.

Obwohl die vorliegende Erfindung anhand der Ausführungsbeispiele ausführlich beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen vorgenommen werden können, ohne dass der Schutzbereich der beigefügten Ansprüche verlassen wird.

## Patentansprüche

1. Plattformwaage mit einer Plattform (2, 100), die eine Aufnahmefläche zur Aufnahme des Wiegegutes aufweist, wobei die Längs- und Breitenerstreckung der Plattform ein Vielfaches der Dicke der Plattform beträgt und die Aufnahmefläche in einer Aufnahmeebene liegt, die durch die Längserstreckung und die Breitenerstreckung der Aufnahmefläche aufgespannt ist, und mit mindestens einer, vorzugsweise einer Vielzahl an Wägezellen (7, 8, 9, 10) zur Ermittlung des Gewichts des Wiegegutes, wobei die Plattform eine Rahmenkonstruktion (30) zur Versteifung der Plattform aufweist, und wobei die Rahmenkonstruktion mindestens eine, vorzugsweise mehrere parallel zur Aufnahmeebene und quer über die Aufnahmefläche oder entlang der Seite der Aufnahmefläche verlaufende Versteifungsstreben (31, 32, 33, 80) aufweist, wobei die Versteifungsstreben ein durch mindestens eine Kantung hergestelltes Kantprofil sind, welche mehrere zueinander parallele Kantungen aufweisen
**dadurch gekennzeichnet, dass**
die Auflagefläche durch eine Auflageplatte (20) gebildet ist, die auf randseitig angeordneten Versteifungsstreben mit mindestens 5 Kantungen angeordnet und zur Bildung von Stirnseiten gekantet ist.

2. Plattformwaage nach Anspruch 1,
**dadurch gekennzeichnet, dass**
die Versteifungsstreben (31, 32, 33, 80) ein Kreuz bilden und/oder parallel und beabstandet zueinander und/oder umlaufend um die Aufnahmefläche angeordnet sind.

3. Plattformwaage nach Anspruch 1 oder 2,
**dadurch gekennzeichnet, dass**
die Versteifungsstreben (31, 32, 33) Ausnehmungen zum gegenseitigen Ineinandergreifen aufweisen und/oder die Versteifungsstreben (80) eine Schulter aufweisen, in welcher mindestens eine Auflageplatte angeordnet ist.

4. Plattformwaage nach einem der vorhergehenden Ansprüche,
**dadurch gekennzeichnet, dass**
die Plattformwaage Versteifungsstreben umfasst, die mindestens 6 Kantungen zueinander parallele Kantungen aufweisen.

5. Plattformwaage nach einem der vorhergehenden Ansprüche,
**dadurch gekennzeichnet, dass**
die Versteifungsstreben im Querschnitt mindestens eine Form aufweisen, die aus der Gruppe ausgewählt ist, die die Form eines Omegas, des Umfangs eines L, eines C und eines an einer Seite nicht vollständig geschlossenen Rechtecks umfasst.

6. Plattformwaage nach einem der vorhergehenden Ansprüche,
**dadurch gekennzeichnet, dass**
die Versteifungsstrebe eine Ausdehnung entlang einer Kantung aufweist, die länger als in einer, insbesondere jeder Richtung quer dazu ist, insbesondere ein Vielfaches davon aufweist, mindestens zweimal, vorzugsweise mindestens fünfmal länger als die Quererstreckung ist, und/oder die Versteifungsstrebe einen Raum zumindest an zwei, vorzugsweise an drei Seiten begrenzt oder umschließt.

7. Verfahren zur Herstellung einer Plattformwaage, insbesondere nach einem der Ansprüche 1 bis 6, mit einer Plattform, die eine Aufnahmefläche zur Aufnahme des Wiegegutes aufweist, wobei die Längs- und Breitenerstreckung der Plattform (2, 100) so ausgewählt wird, dass sie ein Vielfaches der Dicke der Plattform betragen und die Aufnahmefläche in einer Aufnahmeebene angeordnet wird, die durch die Längserstreckung und die Breitenerstreckung der Aufnahmefläche aufgespannt ist, und wobei mindestens eine, vorzugsweise eine Vielzahl von Wägezellen (7, 8, 9, 10) zur Ermittlung des Gewichts des Wiegegutes an der Plattform angeordnet werden, und wobei an der Plattform eine Rahmenkonstruktion (30) zur Versteifung der Plattform angeordnet wird, und wobei die Rahmenkonstruktion so ausgebildet wird, dass mindestens eine, vorzugsweise mehrere parallel zur Aufnahmeebene und quer über die Aufnahmefläche oder entlang der Seite der Aufnahmefläche verlaufende Versteifungsstreben angeordnet werden, wobei die Versteifungsstreben als Kantprofil ausgebildet werden, welche durch mehrere zueinander parallele Kantungen eines Blechs und /oder durch mindestens eine Kantung eines Blechs, das abweichend von einer rechteckigen Form zugeschnitten ist, hergestellt wird, **dadurch gekennzeichnet, dass**
die Auflagefläche durch eine Auflageplatte (20) gebildet ist, die auf randseitig angeordneten Versteifungsstreben mit mindestens 5 Kantungen angeordnet und zur Bildung von Stirnseiten gekantet ist.

8. Verfahren nach Anspruch 7,
**dadurch gekennzeichnet, dass**
Ausnehmungen und/oder Öffnungen und/oder Schnitte in die Plattform, insbesondere in die Versteifungsstreben mittels Laserschneiden eingebracht werden.

9. Verfahren nach Anspruch 7 oder 8,
**dadurch gekennzeichnet, dass**
Komponenten der Plattform, insbesondere die Rahmenkonstruktion mit einer die Auflagefläche bildenden Auflageplatte und/oder die Versteifungsstreben untereinander, mittels Schweißen, insbesondere Punktschweißen, verbunden werden.

10. Verfahren nach einem der Ansprüche 7 bis 9,
**dadurch gekennzeichnet, dass**
unterschiedliche Plattformwaagen mit insbesondere unterschiedlichen Abmessungen aus zumindest teilweise identischen Komponenten zusammengebaut werden, insbesondere aus identischen Komponenten in Form von Wägezellen, Versteifungsstreben und Lagereinrichtungen.

## Claims

1. A platform scale with a platform (2, 100), which has a receiving surface for receiving the product to be weighed, wherein the longitudinal and width extension of the platform is a multiple of the thickness of the platform and the receiving surface lies in a receiving plane, which is spanned by the longitudinal extension and the width extension of the receiving surface, and with at least one, preferably a plurality of weighing cells (7, 8, 9, 10) for determining the weight of the product to be weighed, wherein the platform has a frame structure (30) for stiffening the platform, and wherein the frame structure has at least one, preferably a plurality of stiffening struts (31, 32, 33, 80) extending parallel to the receiving plane and transversely over the receiving surface or along the side of the receiving surface, wherein the stiffening struts are an edge profile produced by at least one edge which comprises a plurality of mutually parallel edges
**characterised in that**
the support surface is formed by a support plate (20) which is arranged on stiffening struts arranged at the edge with at least 5 edges and which is edged to form end faces.

2. The platform scale according to claim 1,
**characterised in that**
the stiffening struts (31, 32, 33, 80) form a cross and/or are arranged parallel to and at a distance from each other and/or circumferentially around the receiving surface.

3. The platform scale according to claim 1 or 2,
**characterised in that**
the stiffening struts (31, 32, 33) have recesses for mutual engagement and/or the stiffening struts (80) have a shoulder in which at least one support plate is arranged.

4. The platform scale according to any one of the preceding claims,
**characterised in that**
the platform scale comprises stiffening struts which have at least 6 edges which are parallel to one another.

5. The platform scale according to any one of the preceding claims,
**characterised in that**
the stiffening struts have, in cross-section, at least one shape selected from the group consisting of the shape of an omega, the perimeter of an L, a C, and a rectangle not fully closed on one side.

6. The platform scale according to any one of the preceding claims,
**characterised in that**
the stiffening strut has an extension along an edge that is longer than in one, in particular in each direction transverse thereto, in particular has a multiple thereof, is at least twice, preferably at least five times longer than the transverse extension, and/or the stiffening strut delimits or encloses a space at least on two, preferably on three sides.

7. A method of manufacturing a platform scale, in particular according to any of claims 1 to 6, with a platform which has a receiving surface for receiving the product to be weighed, wherein the longitudinal and width extension of the platform (2, 100) is selected to be a multiple of the thickness of the platform and the receiving surface is arranged in a receiving plane, which is spanned by the longitudinal extension and the width extension of the receiving surface, and wherein at least one, preferably a plurality of weighing cells (7, 8, 9, 10) for determining the weight of the product to be weighed are arranged on the platform, and wherein a frame structure (30) for stiffening the platform is arranged on the platform, and wherein the frame structure is designed in such a way that at least one, preferably a plurality of stiffening struts running parallel to the receiving plane and transversely over the receiving surface or along the side of the receiving surface are arranged, wherein the stiffening struts are designed as an edge profile which is produced by a plurality of mutually parallel edges of a metal sheet and/or by at least one edge of a metal sheet which is cut to a shape different from a rectangular shape,
**characterised in that**
the support surface is formed by a support plate (20) which is arranged on stiffening struts arranged at the edge with at least 5 edges and which is edged to form end faces.

8. The method according to claim 7,
**characterised in that**
recesses and/or openings and/or cuts are introduced into the platform, in particular into the stiffening struts by means of laser cutting.

9. The method according to claim 7 or 8,
**characterised in that**
components of the platform, in particular the frame structure, are connected to a support plate forming the support surface and/or the stiffening struts are connected to one another by means of welding, in particular spot welding.

10. The method according to any of claims 7 to 9,
**characterised in that**
different platform scales with in particular different dimensions can be assembled from at least partially identical components, in particular from identical components in the form of load cells, stiffening struts and bearing devices.

## Revendications

1. Balance à plate-forme munie d'une plate-forme (2, 100), qui présente une surface de réception pour recevoir le produit à peser, dans laquelle l'étendue de longueur et de largeur de la plate-forme comporte un multiple de l'épaisseur de la plate-forme et la surface de réception se situe dans un plan de réception, qui est tendue par l'étendue de longueur et l'étendue de largeur de la surface de réception, et avec au moins un, de préférence une pluralité de cellules de pesée (7, 8, 9, 10) pour déterminer le poids du produit à peser, dans laquelle la plate-forme présente une structure de cadre (30) pour renforcer la plate-forme, et dans laquelle la structure de cadre (30) présente au moins une, de préférence plusieurs entretoises de renforcement (31, 32, 33, 80) s'étendant parallèlement au plan de réception et transversalement sur la surface de réception ou le long du côté de la surface de réception, dans laquelle les entretoises de renforcement représentent un profil à pans fabriqué par au moins une arête, lesquelles présentent plusieurs arêtes parallèles les unes aux autres
**caractérisée en ce que**
la surface d'appui est formée par une plaque d'appui (20), qui est disposée avec au moins 5 arêtes sur des entretoises de renforcement disposées du côté du bord et est pliée pour la formation de côtés frontaux.

2. Balance à plate-forme selon la revendication 1,
**caractérisée en ce que**
les entretoises de renforcement (31, 32, 33, 80) forment une croix et/ou sont parallèles et espacées les uns des autres et/ou disposées circonférentiellement autour de la surface de réception.

3. Balance à plate-forme selon la revendication 1 ou 2,
**caractérisée en ce que**
les entretoises de renforcement (31, 32, 33) présentent des évidements pour une imbrication mutuelle et/ou les entretoises de renforcement (80) présentent un épaulement, dans lequel au moins une plaque d'appui est disposée.

4. Balance à plate-forme selon l'une quelconque des revendications précédentes, **caractérisée en ce que**
la balance à plate-forme comprend des entretoises de renforcement, qui présentent au moins 6 arêtes parallèles les uns aux autres.

5. Balance à plate-forme selon l'une quelconque des revendications précédentes, **caractérisée en ce que**
les entretoises de renforcement présentent en section transversale au moins une forme, qui est choisie parmi le groupe, qui comprend la forme d'un oméga, de la circonférence d'un L, d'un C et d'un rectangle qui n'est pas entièrement fermé sur un côté.

6. Balance à plate-forme selon l'une quelconque des revendications précédentes, **caractérisée en ce que**
l'entretoise de renforcement présente une extension le long d'une arête, qui est supérieure à celle dans une direction, en particulier chaque direction transversale à celle-ci, en particulier présente un multiple de celle-ci, qui est au moins deux fois, de préférence au moins cinq fois plus long que l'étendue transversale, et/ou l'entretoise de renforcement délimite ou entoure un espace au moins sur deux, de préférence sur trois côtés.

7. Procédé de fabrication d'une balance à plate-forme, en particulier selon l'une quelconque des revendications 1 à 6, avec une plate-forme, qui présente une surface de réception pour recevoir le produit à peser, dans lequel l'étendue de longueur et de largeur de la plate-forme (2, 100) est choisie de telle manière qu'elle comporte un multiple de l'épaisseur de la plate-forme et la surface de réception est disposée dans un plan de réception, qui est tendu par l'étendue de longueur et l'étendue de largeur de la surface de réception, et dans lequel au moins une, de préférence une pluralité de cellules de pesée (7, 8, 9, 10) sont disposées pour déterminer le poids du produit à peser sur la plate-forme, et dans lequel une structure de cadre (30) est disposée sur la plate-forme pour renforcer la plate-forme, et dans lequel la structure de cadre est conçue de telle manière qu'au moins un, de préférence plusieurs entretoises de renforcement s'étendant parallèlement au plan de réception et transversalement sur la surface de réception ou le long du côté de la surface de réception sont disposées, dans lequel les entretoises de renforcement sont conçues en tant que profil à pans, lequel est fabriqué par plusieurs arêtes parallèles les unes aux autres d'une tôle et/ou par au moins une arête d'une tôle, qui est coupée de manière à différer d'une forme rectangulaire,
**caractérisé en ce que**
la surface d'appui est formée par une plaque d'appui (20), qui est disposée avec au moins 5 arêtes sur des entretoises de renforcement disposées du côté du bord et est pliée pour la formation de côtés frontaux.

8. Procédé selon la revendication 7,
**caractérisé en ce que**
des évidements et/ou des ouvertures et/ou des sections ont été réalisés dans la plate-forme, en particulier dans les entretoises de renforcement au moyen de découpes au laser.

9. Procédé selon la revendication 7 ou 8,
**caractérisé en ce que**
des composants de la plate-forme, en particulier la structure de cadre sont reliés entre eux avec l'une des plaques d'appui formant la surface d'appui et/ou les entretoises de renforcement au moyen de soudages, en particulier de soudages par points.

10. Procédé selon l'une quelconque des revendications 7 à 9,
**caractérisé en ce que**
différentes balances à plate-forme avec en particulier différentes dimensions ont été assemblées à partir de composants au moins partiellement identiques, en particulier à partir de composants identiques sous la forme de cellules de pesée, d'entretoises de renforcement et de dispositifs de support.
